# EUROPÄISCHE PATENTSCHRIFT

(11) **EP 3 302 994 B1**
(45) Veröffentlichungstag und Bekanntmachung des Hinweises auf die Patenterteilung: **06.10.2021**
(21) Anmeldenummer: 16738350.4
(22) Anmeldetag: 20.05.2016
(51) Int. Cl.: B42D 25/00

(54) **VERFAHREN ZUR FÄLSCHUNGSERKENNUNG VON IDENTIFIKATIONSDOKUMENTEN, DIE EIN GESICHTSBILD MIT IR-ABSOBIERENDEN BESTANDTEILEN ENTHALTEN**
METHOD FOR RECOGNIZING COUNTERFEITS OF IDENTITY DOCUMENTS, WHERE THE PHOTO PORTRAIT IMAGE CONTAINS IR-ABSORBERS
PROCÉDÉ POUR RECONNAÎTRE DES DOCUMENTS D'IDENTITÉ, OU LE PHOTO-PORTRAIT CONTIENT DES ÉLÉMENTS ABSORBANT L'INFRAROUGE

(30) Priorität: 28.05.2015 DE 102015108432
(43) Veröffentlichungstag der Anmeldung: 11.04.2018
(73) Patentinhaber: Bundesdruckerei GmbH, 10969 Berlin (DE)
(72) Erfinder: RACH, Andreas, 10119 Berlin (DE); MAGGIONI, Christoph, 10961 Berlin (DE)
(74) Vertreter: Bittner, Thomas L.
(86) Internationale Anmeldenummer: PCT/DE2016/100232
(87) Internationale Veröffentlichungsnummer: WO 2016/188514

(56) Entgegenhaltungen:
- WO-A2-2004/049242
- DE-A1-102009 037 832
- US-A1- 2004 074 973

## Beschreibung

Die Erfindung betrifft ein Verfahren zur Fälschungserkennung von Identifikationsdokumenten, die ein Gesichtsbild mit lR-absorbierenden Bestandteilen enthalten, sowie ein dazugehöriges Computerprogramm oder computerlesbares Speichermedium.

### Technologischer Hintergrund

Identifikationsdokumente, wie beispielsweise Personaldokumente, Zutrittskontrollausweise, Kraftfahrzeugdokumente und Visa, weisen in der Regel definierte Sicherheitsmerkmale auf, die das Fälschen erschweren oder gar unmöglich machen sollen. Generell kann man zwischen optischen, haptischen und akustischen Sicherheitsmerkmalen unterscheiden. Die nachfolgend noch näher erläuterte erfindungsgemäße Fälschungserkennung betrifft nur Identifikationsdokumente, die ein spezielles optisches Sicherheitsmerkmal aufweisen.

Bei optischen Sicherheitsmerkmalen von Identifikationsdokumenten kann ferner zwischen Sicherheitsmerkmalen unterschieden werden, die im sichtbaren Bereich für den Menschen erkennbar sind, und Sicherheitsmerkmalen, die erst durch zusätzliche technische Maßnahmen sichtbar werden. Letztere umfassen Sicherheitsmerkmale, die mittels Infrarotlicht auslesbar sind.

Es ist ferner bekannt, in Identifikationsdokumenten Gesichtsbilder nicht nur als unmittelbar für den Menschen sichtbare Bilder einzubringen, sondern auch zumindest Bestandteile des Gesichtsbildes zusätzlich in unter Infrarotlicht lesbarer Form dort zu hinterlegen. So sind beispielsweise Tinten entwickelt worden, die lR-absorbierende Pigmente enthalten. Bestandteile des Gesichtsbildes, die mit einer solchen Tinte gedruckt werden, wären also sowohl im sichtbaren Bereich als auch unter Infrarotlicht erkennbar. Eine weitere Möglichkeit der Erzeugung von unter Infrarotlicht sichtbaren Merkmalen beispielsweise in Kartendokumenten ist die Laserstrahlgravur. Durch die Laserbestrahlung entstehen Verbrennungen, deren schwarze Rußpartikel lR-absorbierend und dadurch auch unter Infrarotlicht sichtbar sind.

Im Zuge der Erkennung von Fälschungen ist ferner bekannt, dass ein völliges Fehlen von IRabsorbierenden Bestandteilen im Gesichtsbild als Indiz für eine Fälschung gedeutet werden kann. Mit anderen Worten, sind bei einem Identifikationsdokument Bestandteile des Gesichtsbildes unter Infrarotlicht sichtbar, so genügt in der Regel dieser Umstand gänzlich, um eine Fälschung auszuschließen, auch wenn tatsächlich das sichtbare Gesichtsbild verklebt, überdruckt oder anders durch Auftrag von Farbe manipuliert wurde und somit ein gefälschtes, abweichendes Gesichtsbild zeigt.

DE 10 2009 037 832 A1 offenbart ein Verfahren zur Fälschungserkennung von Identifikationsdokumenten, umfassend ein Auslesen von lR-absorbierenden Bestandteilen eines Gesichtsbildes mit einem IR-Lesegerät.

Es besteht daher anhaltender Bedarf nach einem verbesserten Verfahren zur Erkennung von Fälschungen bei Gesichtsbildern, die neben sichtbaren Daten lR-absorbierende Bestandteile enthalten. Insbesondere sollen Fälschungen erkennbar sein, die entstehen, wenn das Gesichtsbild mit einem zusätzlichen lR-absorbierenden Gesichtsbild bedruckt oder überklebt wird.

### Zusammenfassung der Erfindung

Mit Hilfe des erfindungsgemäßen Verfahrens zur Fälschungserkennung von Identifikationsdokumenten, die ein Gesichtsbild mit lR-absorbierenden Bestandteilen enthalten, werden die geschilderten Mängel des Standes der Technik behoben oder zumindest gemindert. Das Verfahren umfasst dazu die Schritte:
(i) Auslesen der lR-absorbierenden Bestandteile des Gesichtsbildes mit einem IR-Lesegerät;
(ii) Bestimmen einer Anzahl von erkannten Gesichtern mit einer Gesichtserkennungssoftware anhand der ausgelesenen lR-absorbierenden Bestandteile des Gesichtsbildes; und
(iii) für den Fall, dass die Anzahl der erkannten Gesichter größer 1 ist, Erzeugen eines Prüfsignals.

Der Erfindung liegt die Erkenntnis zugrunde, dass neben der gefälschten lR-PersonaIisierung nach wie vor die originale lR-PersonaIisierung erscheint, wenn das Gesichtsbild überdruckt oder überklebt wird. Eine reine Prüfung auf Vorhandensein von lR-Absorption würde in einem solchen Fall als nicht auffällig befunden werden. Die kompakte und damit wenig fehleranfällige erfindungsgemäße Routine nutzt jedoch die aus dem originalen und gefälschten Datensatz erfassten IR-Daten zur Fälschungserkennung.

In einem ersten Schritt (i) werden dazu die lR-absorbierenden Bestandteile des Gesichtsbildes mit einem lR-Lesegerät ausgelesen. Derartige lR-Lesegeräte zur Erfassung der lR-absorbierenden Bestandteile des Gesichtsbildes von Identifikationsdokumenten sind hinlänglich aus dem Stand der Technik bekannt, so dass an dieser Stelle auf ein näheres Eingehen verzichtet wird.

Unter "IR-absorbierend" wird vorliegend insbesondere der Umstand verstanden, das IRabsorbierende Bereiche in einer Aufnahme unter IR-Licht dunkel oder schwarz erscheinen und per Bildverarbeitung erkannt und ausgewertet werden können. Demgegenüber erscheinen Bereiche, die nicht mit lR-absorbierenden Farben und/oder Pigmenten gedruckt wurden, transparent bei Bestrahlung mit IR-Licht.

Nachfolgend wird gemäß Schritt (ii) des erfindungsgemäßen Verfahrens eine Anzahl von erkannten Gesichtern mit einer Gesichtserkennungssoftware anhand der ausgelesenen IRabsorbierenden Bestandteile des Gesichtsbildes in einer Auswerteeinheit ermittelt. Für diese Zwecke nutzbare Gesichtserkennungssoftware ist ebenfalls seit Langem bekannt. Im Vordergrund steht dabei nicht, das Gesicht korrekt zur erfassen, sondern vielmehr schlicht die Anzahl der überhaupt erkannten Gesichter zu bestimmen. Dementsprechend schlank kann die dazugehörige Identifikationsroutine ausgelegt sein.

Bevorzugt umfassen dabei die lR-absorbierenden Bestandteile des Gesichtsbildes die Augen und im Schritt (ii) wird die Anzahl erkannter Gesichter anhand der Anzahl erkannter Augenpaare ermittelt. Diese Routine ist besonders zuverlässig und lässt sich in einfacher Weise in der Auswerteeinheit implementieren.

Schließlich wird im Schritt (iii) für den Fall, dass die Anzahl der erkannten Gesichter größer 1 ist, ein Prüfsignal erzeugt. Das Prüfungssignal wird beispielsweise zur Erzeugung eines Signaltons oder eines optischen Warnhinweises verwendet, um den Nutzer auf eine mögliche Fälschung hinzuweisen.

Identifikationsdokumente, für die das erfindungsgemäße Verfahren Anwendung finden kann, umfassen insbesondere Reisepässe, Personalausweise, Führerscheine, Zugangskontrollausweise oder andere ID-Karten, Visa, Scheck-, Bank-, Kredit- oder Barzahlungskarten, Kundenkarten, Gesundheitskarten, Chipkarten, Firmenausweise, Mitgliedsausweise und Urkunden.

Ein weiterer Aspekt der Erfindung liegt in der Bereitstellung eines Computerprogramms, das es einer Datenverarbeitungsanlage ermöglicht, nachdem es in ein Speichermittel der Datenverarbeitungsanlage geladen worden ist, das zuvor geschilderte Verfahren zur Fälschungserkennung von Identifikationsdokumenten durchzuführen.

Ferner betrifft die Erfindung ein computerlesbares Speichermedium, auf dem ein Programm gespeichert ist, dass es einer Datenverarbeitungsanlage ermöglicht, nachdem es in ein Speichermittel der Datenverarbeitungsanlage geladen worden ist, das zuvor geschilderte Verfahren zur Fälschungserkennung von Identifikationsdokumenten durchzuführen.

Weitere bevorzugte Ausführungsformen lassen sich der nachfolgenden Beschreibung entnehmen.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1: eine schematische Darstellung eines Identifikationsdokuments mit einem Gesichtsbild
- Fig. 2: eine schematische Darstellung des erfindungsgemäßen Verfahrensablaufs zur Fälschungserkennung

### Detaillierte Beschreibung der Erfindung

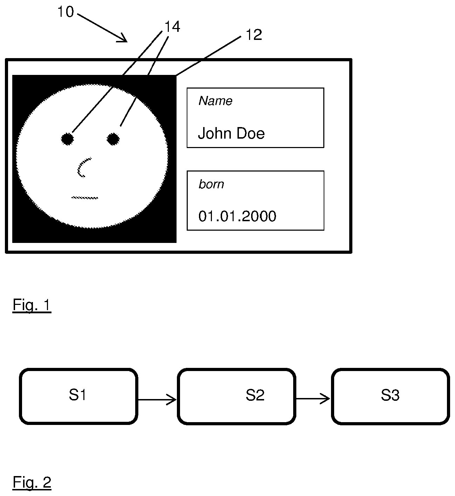

Figur 1 ist ein Identifikationsdokument 10 zu entnehmen, das ein für das erfindungsgemäße Verfahren nutzbares Gesichtsbild 12 enthält. Das Gesichtsbild 12 ist für das menschliche Auge sichtbar, enthält aber auch unter Infrarotlicht sichtbare Bestandteile. Beispielsweise können die als Echtschwarzelemente in das Identifikationsdokument 10 integriert sein, so dass das Augenpaar 14 unter Infrarotlicht sichtbar ist.

Nachfolgend wird in Figur 2 beschrieben, wie mit Hilfe des erfindungsgemäßen Verfahrens zur Fälschungserkennung von Identifikationsdokumenten, die ein Gesichtsbild mit IRabsorbierenden Bestandteilen enthalten, eine Überprüfung stattfinden kann.

Im Schritt S1 werden dazu die lR-absorbierenden Bestandteile des Gesichtsbildes 12 mit Hilfe eines hier nicht dargestellten lR-Lesegerätes ausgelesen und in digitalisierten Form für eine Auswerteeinheit bereitgestellt.

Die ausgelesenen Daten werden anschließend mit einer herkömmlichen Gesichtserkennung derart ausgewertet, dass eine Anzahl der erkannten Gesichter bestimmt wird (Schritt S2). Die Anzahl der Gesichter kann besonders einfach anhand der bestimmten Anzahl an Augenpaaren 14 ermittelt werden. In einem originalen Gesichtsbild ist die Anzahl 1.

Für den Fall allerdings, dass das dargestellte Gesichtsbild nachträglich aufgeklebt oder aufgedruckt wurde, würde nun beim Auslesen der IR-Daten neben dem falschen Augenpaar 14 noch das originale Augenpaar erscheinen. Dementsprechend wäre die von der Gesichtserkennung erfasste Anzahl der Gesichter im Gesichtsbild größer als 1. Im Schritt S3 würde in einem solchen Fall dann ein Prüfsignal erzeugt werden, das weitere Kontrollmechanismen in Gang setzt oder zur Ausgabe eines Warnsignals oder dergleichen führt.

### Bezugszeichenliste

- 10: Identifikationsdokument
- 12: Gesichtsbild
- 14: Augenpaar

## Patentansprüche

1. Verfahren zur Fälschungserkennung von Identifikationsdokumenten, die ein Gesichtsbild mit lR-absorbierenden Bestandteilen enthalten, umfassend die Schritte:
(i) Auslesen der lR-absorbierenden Bestandteile des Gesichtsbildes mit einem lR-Lesegerät;
(ii) Bestimmen einer Anzahl von erkannten Gesichtern mit einer Gesichtserkennungssoftware anhand der ausgelesenen lR-absorbierenden Bestandteile des Gesichtsbildes; und
(iii) für den Fall, dass die Anzahl der erkannten Gesichter größer 1 ist, Erzeugen eines Prüfsignals.

2. Verfahren nach Anspruch 1, bei dem die lR-absorbierenden Bestandteile des Gesichtsbildes die Augen umfassen und im Schritt (ii) die Anzahl erkannter Gesichter anhand der Anzahl erkannter Augenpaare ermittelt wird.

3. Computerprogramm, das es einer Datenverarbeitungsanlage ermöglicht, nachdem es in ein Speichermittel der Datenverarbeitungsanlage geladen worden ist, ein Verfahren zur Fälschungserkennung von Identifikationsdokumenten gemäß einem der vorhergehenden Ansprüche durchzuführen.

4. Computerlesbares Speichermedium, auf dem ein Programm gespeichert ist, dass es einer Datenverarbeitungsanlage ermöglicht, nachdem es in ein Speichermittel der Datenverarbeitungsanlage geladen worden ist, ein Verfahren zur Fälschungserkennung von Identifikationsdokumenten gemäß einem der Ansprüche 1 und 2 durchzuführen.

## Claims

1. A method for recognizing forgeries of identification documents containing a facial image with IR-absorbing components, comprising the steps:
(i) reading out the IR-absorbing components of the facial image by means of an IR reading device;
(ii) determining a number of recognized faces using facial recognition software based on the IR-absorbing components of the facial image that have been read out; and
(iii) in the event that the number of recognized faces is greater than 1, generating a check signal.

2. The method according to claim 1, in which the IR-absorbing components of the facial image comprise the eyes and in step (ii) the number of faces recognized is determined based on the number of pairs of eyes recognized.

3. A computer program which allows a data-processing system to carry out a method for recognizing forgeries of identification documents according to any one of the preceding claims, once it has been loaded into a storage means of the data-processing system.

4. A computer-readable storage medium on which a program is stored, which allows a data-processing system to carry out a method for recognizing forgeries of identification documents according to claims 1 and 2, once it has been loaded into a storage means of the data-processing system.

## Revendications

1. Procédé de détection de falsification de documents d'identification qui contiennent une image faciale avec des composants absorbant les IR, comprenant les étapes ci-dessous :
(i) lire les composants absorbant les IR de l'image faciale avec un lecteur IR ;
(ii) déterminer un certain nombre de visages reconnus avec un logiciel de reconnaissance faciale basé sur les composants d'absorption lR lus de l'image du visage ; et
(iii) dans le cas où le nombre de visages reconnus est supérieur à 1, générer un signal de test.

2. Procédé selon la revendication 1, dans lequel les composants absorbant I'IR de l'image du visage comprennent les yeux et à l'étape (ii) le nombre de visages reconnus est déterminé basé sur le nombre de paires d'yeux reconnues.

3. Programme informatique permettant à un système informatique, après son chargement dans un moyen de mémorisation du système informatique, de mettre en œuvre un procédé de détection de faux documents d'identification selon une des revendications précédentes.

4. Support de mémorisation lisible par ordinateur sur lequel est mémorisé un programme qui permet à un système de traitement de données, après qu'il a été chargé dans un moyen de mémorisation du système de traitement de données, de mettre en œuvre un procédé pour effectuer une détection de falsification de documents d'identification selon une des revendications 1 et 2.
